(19) Europäisches Patentamt / European Patent Office / Office européen des brevets

(11) **EP 2 648 191 B1**

(12) **EUROPEAN PATENT SPECIFICATION**

(45) Date of publication and mention
of the grant of the patent:
**13.02.2019 Bulletin 2019/07**

(51) Int Cl.:
*H01B 7/02* *(2006.01)*     *C08F 210/06* *(2006.01)*
*H01B 3/44* *(2006.01)*     *H01B 11/00* *(2006.01)*

(21) Application number: **11844221.9**

(86) International application number:
**PCT/JP2011/077672**

(22) Date of filing: **30.11.2011**

(87) International publication number:
**WO 2012/074006 (07.06.2012 Gazette 2012/23)**

(54) **INSULATED WIRE AND CABLE**

ISOLIERTER DRAHT UND KABEL

FIL ET CÂBLE ISOLÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **01.12.2010   JP 2010268854
01.12.2010   JP 2010268856
01.12.2010   JP 2010268857**

(43) Date of publication of application:
**09.10.2013   Bulletin 2013/41**

(60) Divisional application:
**15187625.7 / 2 985 765**

(73) Proprietor: **Fujikura, Ltd.
Tokyo 135-8512 (JP)**

(72) Inventor: **WATANABE Ryo
Sakura-shi
Chiba 285-8550 (JP)**

(74) Representative: **Hoffmann Eitle
Patent- und Rechtsanwälte PartmbB
Arabellastraße 30
81925 München (DE)**

(56) References cited:
**EP-A1- 2 433 982         FR-A1- 2 917 741
JP-A- 2004 026 968     JP-A- 2009 161 644
JP-A- 2009 299 052     JP-A- 2009 535 454
US-A1- 2004 158 000**

EP 2 648 191 B1

**Description**

<u>TECHNICAL FIELD</u>

The present invention relates to an insulated wire and a cable.

<u>BACKGROUND ART</u>

Accompanying the development of electronic devices using frequencies in the gigahertz band in recent years, USB 3.0 cables, HDMI cables, InfiniBand cables, micro USB cables and other high-speed transmission cables used to connect these devices are being required to have superior dielectric characteristics in the gigahertz band.

The cable described in, for example, JP-A-2009-81132 is known to be such a transmission cable. JP-A-2009-81132 proposes that superior dielectric characteristics are obtained by using, as an insulating layer that covers a conductor, a material obtained by incorporating a phenol-based antioxidant not having a hindered phenol structure in an olefin-based resin.

EP-A-2 433 982 discloses a ccommunication cable comprising a conductor and a dielectric layer which has a dissipation factor tan $\delta$ of $\leq 1.20 \times 10^{-4}$ at 1.9 GHz and comprises a composition (A) comprising (a) a polypropylene (PP) and (b) a phosphorous antioxidant (Pho-A) and/or a salt of a fatty acid (S-FA), the cation of the salt of a fatty acid (S-FA) is selected from group 2 of the periodic table, preferably the salt of a fatty acid (S-FA) is calcium stearate (Ca-S).

US 2004/0158000 A1 describes a polypropylene (PP) resin composition consisting of (A) 10-99 wt.-% of a PP homopolymer made by polymerization with a metallocene catalyst and having a DSC melting peak in the range of 120-170 and an intrinsic viscosity of 0.5-6 dl/g, and (B) 90-1 wt.-% of an amorphous $\alpha$-olefin polymer containing $\geq 20$ mol-% of $C_{3-20}$-($\alpha$-olefin) units and having no DSC melting peak, an intrinsic viscosity of 0.1-10 dl/g, and a MW distribution of $\leq 4$.

JP-A_2009-161644 relates to a self-extinguishable polypropylene resin composition for molded items comprising 100 pbw of a mixture of a propylene-ethylene copolymer component (A) having, observed within the temperature range of -60°C to 20°C in the temperature-loss tangent curve by the solid viscoelasticity measurement, a single peak which is at a peak temperature of $\leq 0°C$ and fullfilling further conditions (ii-A)- (ii-C) in a TREF elution diagram, with a process oil component (C), and 50-300 pbw of a metal hydrate component (B).

JP-A-2009-299052 discloses a flame-retardant resin composition obtained by blending 80-400 pbw of a metal hydroxide (Y) to 100 pbw of a propylene-ethylene block copolymer (X1) obtained by successively polymerizing a crystalline propylene-ethylene random copolymer component (A), and a low crystalline or amorphous propylene-ethylene random copolymer component (B), which flame-retardant resin composition has (i) a DSC fusion peak temperature of the component (A) of 90-140°C, (ii) a ratio of the component (B) to the total amount of the copolymer of 10-90 mass-%, and (iii) a content of ethylene in the component (B) of 40-75 mass%.

FR-A-2 97 741 describes a composition comprising a polymer, a first and a second antioxidant and, as a first and a second metal deactivator, 2,2'-oxamidobis-[ethyl-3-(3,5-dit-butyl-4-hydroxyphenyl)propionate] and 2',3-bis[[3-(3,5-dit-butyl-4-hydroxyphenyl)propionyl)propionohydrazide in a total amount of the two antioxidants and the two metal deactivators of < 40 pbw per 100 pbw of the polymer in the composition.

<u>SUMMARY OF THE INVENTION</u>

<u>PROBLEMS TO BE SOLVED BY THE INVENTION</u>

However, the cable described in JP-A-2009-81132 had the problems indicated below.

Namely, in the case of using polyethylene for the olefin-based resin of the insulating layer, there are limitations on polyethylene for allowing the obtaining of superior dielectric characteristics in high frequency bands. Therefore, the insulating layer has been used in the form of a foamed body in order to obtain superior dielectric characteristics while using polyethylene for the olefin-based resin of the insulating layer. However, in the case of the insulating layer being in the form of a foamed body, it was necessary to reduce the thickness of the insulating layer accompanying reductions in diameter of the transmission cable. In this case, mechanical strength of the insulating layer decreases and the insulating layer is easily crushed by lateral pressure. Consequently, it is difficult to impart heat resistance at the level of UL90°C to the insulating layer with polyethylene. Therefore, it was considered to use a propylene-based resin having a higher melting point instead of polyethylene for the olefin-based resin from the viewpoint of imparting heat resistance at the level of UL90°C to the insulating layer. However, in the case of an insulating layer that contains a propylene-based resin, there are cases in which dielectric tangent in the gigahertz band cannot be said to be sufficiently small, thereby leaving room for improvement with respect to dielectric characteristics in the gigahertz band.

Therefore, an object of the present invention is to provide an insulated wire and a cable capable of realizing superior dielectric characteristics in the gigahertz band as well as superior heat aging resistance characteristics.

In addition, another object is to provide an insulated wire and a cable capable of realizing superior dielectric characteristics in the gigahertz band as well as superior crush resistance and heat resistance.

MEANS FOR SOLVING THE PROBLEMS

The present inventor conducted extensive studies to achieve the aforementioned object of the present invention. As a result, the present inventor considered the following. Namely, even if using a propylene-based resin, propylene-based resins synthesized using a general-purpose catalyst such as a Ziegler-Natta catalyst include propylene-based resins having a broad molecular weight distribution and low molecular weight. These low molecular weight propylene-based resins are susceptible to the occurrence of molecular vibration at high frequencies. Consequently, the present inventor considered that even if using a propylene-based resin, propylene-based resins synthesized using a general-purpose catalyst such as a Ziegler-Natta catalyst are susceptible to the occurrence of heat loss, and that this causes an increase in dielectric tangent at high frequencies. Therefore, the present inventor conducted additional extensive studies. As a result, it was found that, in addition to using a propylene-based copolymer synthesized using a metallocene catalyst as a propylene-based copolymer, by incorporating an antioxidant having a specific structure in the propylene-based copolymer at a prescribed ratio, the above-mentioned object of the present invention can be achieved.

In the present insulated wire, the insulating layer further contains a metal deactivator having a chemical structure that differs from a hindered phenol structure, and the metal deactivator be incorporated at a ratio of 0.01 to < 1.5 parts by mass ("pbm" hereinafter) based on 100 pbm of the propylene-based copolymer.

In this case, heat aging resistance characteristics of the insulated wire are further improved.

Thus, the present invention provides an insulated wire comprising

(i) a conductor and, covering the conductor
(ii) an insulating layer containing

- a propylene-based copolymer obtained by synthesis using a metallocene catalyst and, per 100 pbm of the propylene-based copolymer
- 0.01 to < 1.5 pbm of an antioxidant having a chemical structure different from a hindered phenol structure; and
- 0.01 to < 1.5 pbm of a metal deactivator having a chemical structure different from a hindered phenol structure.

In this insulated wire, the propylene-based copolymer contained in the insulating layer is a propylene-based copolymer obtained by synthesis using a metallocene catalyst. Consequently, the width of molecular weight distribution can be narrowed in comparison with propylene-based copolymers synthesized using a general-purpose catalyst such as a Ziegler-Natta catalyst. Consequently, the ratio of low molecular weight propylene-based copolymers in the insulating layer, which causes molecular vibration at high frequencies and which are thought to be a factor increasing a dielectric tangent, can be adequately reduced. In addition, propylene-based copolymers are typically susceptible to oxidative degradation due to contact with the conductor and contain easily degradable tertiary carbons. Consequently, the molecules in propylene-based copolymers are easily severed. In this point, the antioxidant in the present invention having a chemical structure that differs from a hindered phenol structure is incorporated at a ratio of 0.01 to < 1.5 pbm based on 100 pbm of the propylene-based copolymer. Consequently, degradation of the propylene-based copolymer can be adequately inhibited. Accordingly, with the insulated wire of the present invention, superior dielectric characteristics in the gigahertz band and superior heat aging resistance characteristics can be realized.

In the insulated of the present invention, the propylene-based copolymer is preferably an ethylene-propylene copolymer.

In this case, in comparison with the case of using a propylene-based copolymer other than an ethylene-propylene copolymer, in addition to obtaining better strength and heat resistance, more suitable flexibility is obtained.

In the insulated wire of the present invention, the propylene-based copolymer preferably has a melting point of 125-145°C.

If the melting point of the propylene-based copolymer is within the above-mentioned range, more adequate heat resistance can be obtained in comparison with the melting point of the propylene-based copolymer being < 125°C. In addition, if the melting point of the propylene-based copolymer is within the above-mentioned range, better dielectric characteristics can be obtained since crystallinity of the propylene-based copolymer is increased. In addition, better flexibility is obtained in comparison with the case of the melting point of the propylene-based copolymer exceeding 145°C.

In the insulated wire of the present invention, the above-mentioned antioxidant is preferably a semi-hindered phenol-based antioxidant or less-hindered phenol-based antioxidant.

In this case, in addition to obtaining more adequate heat aging resistance characteristics, better dielectric characteristics can be obtained in comparison with the case of using an antioxidant other than a semi-hindered phenol-based antioxidant or less-hindered phenol-based antioxidant.

In addition, the present inventor of the present invention conducted extensive studies and, as a result, considered that as a result of ethylene and butene present in a propylene-based copolymer inhibiting crystallization of propylene, the resulting amorphous portion is susceptible to molecular vibration at high frequencies. Consequently, the present inventor considered that the propylene-based copolymer is susceptible to the occurrence of heat loss, and this might cause an increase in dielectric tangent at high frequencies. Therefore, the inventor of the present invention conducted additional extensive studies. As a result, it was found that, by setting the melting point of the propylene-based copolymer to a prescribed range, setting the total content of ethylene and butene in the propylene-based copolymer to a prescribed value or less, and preventing the content of butene in the propylene-based copolymer from exceeding a prescribed value, the above-mentioned other object can be achieved.

Namely, in an insulated wire of the present invention provided with a conductor and an insulating layer that covers the conductor, it is preferred that the insulating layer contains a propylene-based copolymer having a melting point of 125-145°C, and, in the propylene-based copolymer, the total content of ethylene and butene is ≤ 7 mass-%, and the content of butene is ≤ 2 mass-%.

According to this insulated wire, superior dielectric characteristics in the gigahertz band and superior crush resistance and heat resistance can be realized.

Moreover, the present inventor noticed that there is a correlation between the interval between the portion of the peak of the heat of melting and the portion of the peak of the heat of crystallization observed in a DSC curve of a propylene-based copolymer, and dielectric characteristics in the gigahertz band. Therefore, the present inventor conducted additional extensive studies and, as a result, found that, by setting the melting point of the propylene-based copolymer to a prescribed range and setting the difference between the melting point determined from the portion of the peak of the heat of melting and the crystallization peak temperature determined from the portion of the peak of the heat of crystallization to a prescribed range, the above-mentioned other object can be achieved.

Namely, in an insulated wire of the present invention provided with a conductor and an insulating layer that covers the conductor, the insulating layer preferably contains a propylene-based copolymer having a melting point of 125-145°C, and the propylene-based copolymer satisfies the equation:

```
(melting point - crystallization peak temperature) = 30-40°C.
```

According to this insulated wire, superior dielectric characteristics in the gigahertz band as well as superior crush resistance and heat resistance can be realized.

In the insulated wires of the present invention, the conductor preferably has a body portion containing at least one type of material selected from the group consisting of copper, copper alloy, aluminum and aluminum alloy, and a plating film covering the body portion and containing at least one type of material selected from the group consisting of tin and silver.

In this case, the body portion, which causes degradation of the base resin in the insulating layer, is covered with a plating film that contains at least one type of material selected from the group consisting of tin and silver. Consequently, degradation of the propylene-based copolymer attributable to the conductor is adequately inhibited even if an antioxidant or metal deactivator is not contained in the insulating layer.

In the insulated wires of the present invention, the above-mentioned insulating layer preferably has a thickness of ≤ 0.3 mm.

Propylene-based copolymers are typically brittle and tend to become even more brittle at lower temperatures normal temperature. Consequently, cracks and the like easily form in the insulating layer when the insulated wire is bent. In this point, if the thickness of the insulating layer is ≤ 0.3 mm, there is considerably less susceptibility to occurrence of the problem of embrittlement, and particularly low-temperature embrittlement, in comparison with the case of the thickness of the insulating layer exceeding 0.3 mm.

In addition, the insulated wires of the present invention are preferably insulated wires used in a transmission cable.

In addition, a cable of the present invention is a cable having an insulated wire of the present invention.

Moreover, a transmission cable of the present invention is a transmission cable having any of the above-mentioned insulated wires used in a transmission cable.

In the present invention, "melting point" refers to melting point as measured according to the method of JIS-K7121. More specifically, when a sample in an amount of about 5 mg is used and the sample is:

1) held at a constant temperature of 200°C for 10 minutes;

2) lowered in temperature from 200°C to -60°C at the rate of 10°C/min;

3) held at a constant temperature of -60°C for 10 minutes; and

4) raised in temperature from -60°C to 200°C at the rate of 10°C/min by DSC (Perkin-Elmer Diamond, input compensation type), the melting point refers to the heat-of-melting peak temperature determined as the peak of the heat of melting observed under the condition 4).

In addition, in the present invention, the contents of ethylene and butene in the propylene-based copolymer are determined by infrared spectroscopy in accordance with the calculation formulas described on pp. 413-415 of the Polymer Analysis Handbook of the Polymer Analysis Research Group, The Japan Society for Analytical Chemistry. More specifically, the ethylene and butene contents in the propylene-based copolymer are determined from absorbance obtained by measuring with an infrared spectrophotometer (PerkinElmer Co., Ltd., Spectrum One, FTIR) under conditions of a resolution of 2 $cm^{-1}$ in the transmission mode at 64 cycles of integration using a test piece obtained by peeling off the insulating layer from an insulated wire and molding the insulating layer to a thickness of 0.5-1 mm with a hydraulic press. Here, ethylene refers to ethylene structural units in the propylene-based copolymer, and not to ethylene monomers. Similarly, butene refers to 1-butene structural units in the propylene-based copolymer, and not to butene monomers. Furthermore, the above-mentioned calculation formulas are represented by the following formulas (1) - (3). Here, $A_k$ represents absorbance at k $cm^{-1}$, t represents the thickness (cm) of the test piece, and $\rho$ represents the density (g/$cm^3$) of the test piece. In addition, "PP" represents the propylene-based copolymer.

(1) Ethylene in random PP (mass-%) = $(0.509A_{733} + 0.438A_{722})/t\rho$
(2) Ethylene in block PP (mass-%) = $(1.10A_{722} - 1.51A_{729} + 0.509A_{733})/t\rho$
(3) 1-butene (mass-%) = $12.3(A_{766}/t)$

Moreover, in the present invention, "crystallization peak temperature" refers to crystallization peak temperature determined from the peak of the heat of crystallization observed under the conditions described in the above-mentioned 2).

Moreover, in the present invention, "degree of crystallization" is defined with the following formula:

$$X_C = Hm/H_{m0}$$

(wherein Xc represents degree of crystallization (%), Hm represents heat of melting (J/g), and $H_{m0}$ represents heat of 100% crystallization (J/g). Here, Hm is the heat of melting at the peak of the heat of melting observed when measuring the melting point of the propylene-based copolymer as previously described, and the value determined according to the method of JIS-K7122 is used as the heat of melting. A value of 165 J/g is used for $H_{m0}$. Here, the value of $H_{m0}$ was excerpted from the Polypropylene Handbook, Edward P. Moore, Jr., ed. (1998, p. 149).

EFFECT OF THE INVENTION

According to the present invention, an insulated wire and a cable are provided that have superior dielectric characteristics in the gigahertz band and are able to realize superior heat aging resistance characteristics.

In addition, according to preferred embodiments an insulated wire and a cable are provided that have superior dielectric characteristics in the gigahertz band and are able to realize superior crush resistance and heat resistance.

BRIEF DESCRIPTION OF THE DRAWINGS

FIG. 1 is a partial side view showing an example of the configuration of a cable of the present invention;
FIG. 2 is a cross-sectional view taken along line II-II of FIG. 1;
FIG. 3 is a cross-sectional view showing an example of an internal conductor; and
FIG. 4 is an end view showing another example of the configuration of a cable of the present invention.

MODES FOR CARRYING OUT THE INVENTION

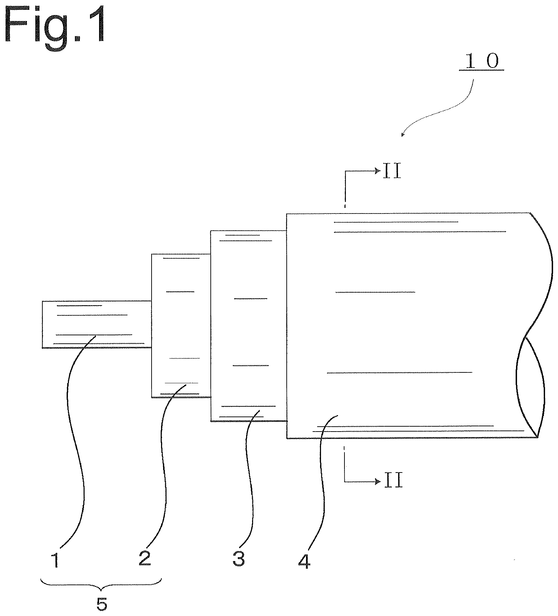

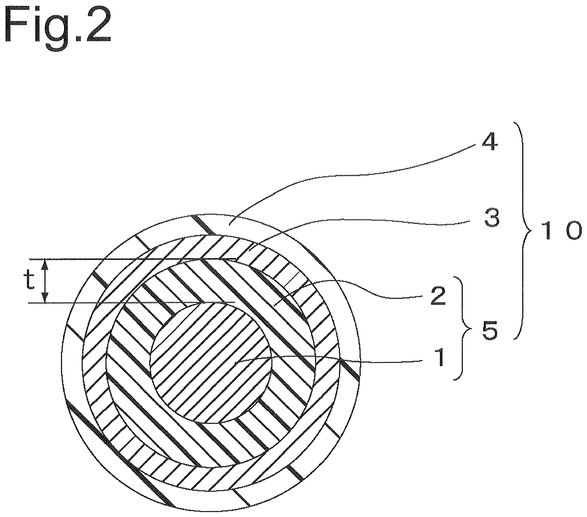

The following provides a detailed explanation of the present invention using FIGS. 1 and 2.

FIG. 1 is a partial side view showing an example of the configuration of a cable of the present invention, and shows an example of applying an insulated wire to a transmission cable in the form of a coaxial cable. FIG. 2 is a cross-sectional view taken along line II-II of FIG. 1. As shown in FIG. 1, a cable 10 indicates a coaxial cable which is a transmission cable, and is provided with an insulated wire 5, an external conductor 3 that surrounds the insulated wire 5, and a sheath 4 that covers the external conductor 3. The insulated wire 5 has an internal conductor 1 and an insulating layer 2 that covers the internal conductor 1.

Here, the insulating layer 2 contains as a base resin thereof a propylene-based copolymer obtained by synthesizing using a metallocene catalyst, and an antioxidant having a chemical structure that differs from a hindered phenol structure. Here, the antioxidant is incorporated at a ratio of 0.01 to < 1.5 pbm based on 100 pbm of the propylene-based copolymer.

According to the cable 10, superior dielectric characteristics in the gigahertz band can be realized by using the insulated wire 5 that uses the insulating layer 2 having the above-mentioned configuration. The reason for being able to realize superior dielectric characteristics in the gigahertz band by the insulated wire 5 in this manner is thought by the inventor of the present invention to be as indicated below. Namely, since the propylene-based copolymer contained in the insulating layer 2 is obtained by synthesizing using a metallocene catalyst, the width of molecular weight distribution can be narrowed as compared with a propylene-based copolymer synthesized using a general-purpose catalyst such as a Ziegler-Natta catalyst. Consequently, the ratio of low molecular weight propylene-based copolymers in the insulating layer 2, which are thought to cause large increases in dielectric tangent resulting from increased susceptibility to molecular vibration at high frequencies in the gigahertz band, can be adequately reduced. Consequently, the inventor of the present invention considers that superior dielectric characteristics can be realized by the insulated wire 5 in the manner described above.

In addition, the propylene-based copolymer is typically susceptible to oxidative degradation due to contact with the internal conductor 1, and contains easily degradable tertiary carbons. Consequently, the molecules in propylene-based copolymers are easily severed. In this point, the insulating layer 2 contains an antioxidant having a chemical structure that differs from a hindered phenol structure, and this antioxidant is incorporated at a ratio of 0.01 to < 1.5 pbm based on 100 pbm of the propylene-based copolymer. Consequently, degradation of the propylene-based copolymer caused by the internal conductor 1 can be adequately inhibited. Consequently, the insulated wire 5 has superior dielectric characteristics in the gigahertz band and is able to realize superior heat aging resistance characteristics.

Next, an explanation is provided of a production method of the cable 10.

First, an explanation is provided of a production method of the insulated wire 5.

<Internal Conductor>

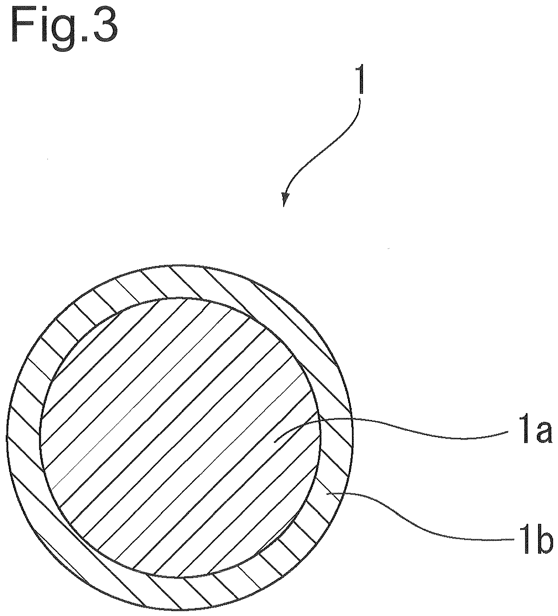

First, the internal conductor 1 is prepared. Examples of the internal conductor 1 include metal wires composed of a metal such as copper, copper alloy, aluminum or aluminum alloy. These metals can be each used alone or in combination. In addition, as shown in FIG. 3, an internal conductor can also be used for the internal conductor 1 that is provided with a body portion 1a composed of the above-mentioned metal, and a plating film 1b that covers the body portion 1a and is formed by carrying out plating composed of at least one type of tin and silver on the surface of the body portion 1a. In addition, a solid wire or stranded wire can also be used for the internal conductor 1.

<Insulating Layer>

Next, the insulating layer 2 is formed on the internal conductor 1.

In order to form the insulating layer 2, a propylene-based copolymer as a base resin and an antioxidant are prepared.

(Base Resin)

The propylene-based copolymer is a propylene-based copolymer obtained by synthesizing using a metallocene catalyst. A propylene-based copolymer refers to a resin that contains propylene as a constituent, and includes not only homopolypropylene, but also copolymers of propylene and other olefins. Examples of other olefins include ethylene, 1-butene, 2-butene, 1-hexene and 2-hexene. Other olefins can be used alone or two or more types can be used in combination. Among these, ethylene or 1-butene is used preferably since it makes crystallinity low and is able to efficiently lower melting point while minimizing deterioration of various characteristics as much as possible when added in small amounts, and ethylene is used more preferably.

More specifically, examples of propylene-based copolymers include ethylene-propylene copolymers, ethylene-propylene-butene copolymers, propylene-butene copolymers, ethylene-propylene-butene-hexene copolymers, ethylene-propylene-hexene copolymers and propylene-butene-hexene copolymers.

Although the propylene-based copolymer may be a random copolymer or block copolymer, it is preferably a random copolymer. In this case, the melting point of the propylene-based copolymer can be further lowered and the flexibility of the insulated wire 5 can be further improved in comparison with the case in which the propylene-based copolymer is a block copolymer.

The melting point of the propylene-based copolymer is preferably 125-145°C. If the melting point of the propylene-based copolymer is within the above-mentioned range, more adequate heat resistance can be obtained in comparison with the case of the melting point being < 125°C. In addition, if the melting point of the propylene-based copolymer is within the above-mentioned range, superior dielectric characteristics can be obtained since the crystallinity of the propylene-based copolymer becomes higher. In addition, since crystallinity does not become excessively high in comparison with the case of the melting point of the propylene-based copolymer exceeding 145°C, flexibility required for use as a cable is obtained.

The melting point of the propylene-based copolymer is preferably 130-145°C and more preferably 133-143°C.

The total content of ethylene and butene in the propylene-based copolymer is preferably ≤ 7 mass-%, and the content of butene in the propylene-based copolymer preferably is ≤ 2 mass-%.

The content of ethylene in the propylene-based copolymer is ≤ 5 mass-%, preferably ≤ 4.5 mass-%, and more preferably ≤ 3.0 mass-%. However, from the viewpoint of improving flexibility, the content of ethylene in the propylene-based copolymer is preferably ≥ 1.0 mass-% and more preferably ≥ 1.3 mass-%. In addition, the content of butene in the propylene-based copolymer is within a range that does not exceed 2.0 mass-%, and is preferably ≤ 1.5 mass-% and more preferably ≤1.0 mass-%. However, the content of butene is preferably ≥ 0.5 mass-% from the viewpoint of improving flexibility, and in the case in which crystallinity is able to be efficiently lowered with ethylene alone, the propylene-based copolymer more preferably does not contain butene.

Furthermore, the contents of ethylene and butene in the propylene-based copolymer can be adjusted by, for example, mixing propylene-based copolymers synthesized using a metallocene catalyst.

The propylene-based copolymer preferably satisfies the equation:

```
Melting point - crystallization peak temperature = 30-40°C.
```

The difference between melting point and crystallization peak temperature is preferably 30-35°C and more preferably 31-34°C.

Furthermore, the difference between melting point and crystallization peak temperature of the propylene-based copolymer can be adjusted by mixing propylene-based copolymers synthesized using a metallocene catalyst.

The propylene-based copolymer preferably has a degree of crystallization of 38-60%. If the degree of crystallization of the propylene-based copolymer is within the above-mentioned range, dielectric tangent can be more adequately lowered as a result of the ratio of amorphous components susceptible to molecular vibration at high frequency bands being further decreased in comparison with the case of the degree of crystallization being < 38%. In addition, more suitable flexibility is obtained in comparison with the case of the degree of crystallization of the propylene-based copolymer exceeding 60%.

(Antioxidant)

The antioxidant prevents degradation of the base resin caused by contact with the internal conductor 1, and may be any antioxidant provided it has a chemical structure that differs from a hindered phenol structure.

Examples of antioxidants having a chemical structure that differs from a hindered phenol structure include semi-hindered phenol-based antioxidants and less-hindered phenol-based antioxidants.

Examples of semi-hindered phenol-based antioxidants include 3,9-bis[2-{3-(3-tertiary-butyl-4-hydroxy-5-methylphenyl)propionyloxyl-1,1-dimethylethyl]-2,4,8,10-tetraoxaspiro[5,5]undecane (for example, ADK STAB AO-80 manufactured by ADEKA CORPORATION), ethylenebis(oxyethylene) bis[3-(5-tert-butyl-hydroxy-m-tolyl)propionate] (for example, IRGANOX 245 manufactured by BASF SE), and triethylene glycolbis[3-(3-tert-butyl-4-hydroxy-5-methylphenyl)propionate] (for example, ADK STAB AO-70 manufactured by ADEKA CORPORATION).

Examples of less-hindered phenol-based antioxidants include 4,4'-thiobis(3-methyl-6-tertiary-butyl)phenol (for example, NOCRAC 300 manufactured by OUCHI SHINKO CHEMICAL INDUSTRIAL CO., LTD.), 1,1,3-tris-(2-methyl-4-hydroxy-5-tertiary-butylphenyl)butane (for example, ADK STAB AO-30 manufactured by ADEKA CORPORATION), and 4,4'-butylidenebis (3-methyl-6-tertiary-butyl)phenol (for example, ADK STAB AO-40 manufactured by ADEKA CORPORATION).

These antioxidants are able to further improve dielectric characteristics in the gigahertz band since they are comparatively insusceptible to frequency.

The antioxidant is added at a ratio of 0.01 to < 1.5 pbm based on 100 pbm of the above-mentioned propylene-based copolymer. In this case, in addition to allowing the obtaining of superior dielectric characteristics, the antioxidant is able to adequately inhibit so-called bloom phenomenon in which particles of antioxidant appear on the surface of the insulating layer 2 in comparison with the case of incorporating at a ratio of ≥ 1.5 pbm. In addition, heat aging resistance is remarkably improved in comparison with the case of incorporating the antioxidant at a ratio of < 0.01 pbm. The antioxidant is more preferably incorporated at a ratio of ≤ 1 pbm based on 100 pbm of the propylene-based copolymer. However, from the viewpoint of improving heat aging resistance with the antioxidant, it is preferably incorporated at a ratio of ≥ 0.05 pbm based on 100 pbm of the base resin.

The above-mentioned insulating layer 2 is obtained by loading the base resin in the form of the propylene-based copolymer, the antioxidant, and as necessary, a metal deactivator into an extruder, melting, kneading and extruding the resin composition in the extruder, and covering the internal conductor 1 with this extrudate.

The outer diameter of the insulating layer 2 is preferably ≤ 40 mm, more preferably ≤ 8 mm and particularly preferably ≤ 1 mm.

Moreover, as shown in FIG. 2, the thickness t of the insulating layer 2 is preferably ≤ 0.3 mm and more preferably ≤ 0.2 mm. Since the propylene-based copolymer is typically brittle and tends to become even more brittle at lower temperatures than normal temperature, cracks and the like easily form in the insulating layer 2 when the cable 10 is bent. In this point, if the thickness t of the insulating layer 2 is ≤ 0.3 mm, there is remarkably less susceptibility to the occurrence of the problem of embrittlement, and particularly the problem of low-temperature embrittlement, in comparison with the case of the thickness t exceeding 0.3 mm. However, the thickness t of the insulating layer 2 is normally ≥ 0.1 mm.

However, the thickness t of the insulating layer 2 may also be greater than 0.3 mm. In this case as well, the problem of low-temperature embrittlement is less likely to occur if used in applications in which the cable 10 is hardly subjected to any bending. However, the thickness t of the insulating layer 2 is normally 6 mm or less for reasons that it is not preferable that workability (weight) at the time of laying cables become poor and the amount of copper used increase unnecessarily.

In the insulated wire 5, although the insulating layer 2 may be a non-foamed body or foamed body, it is preferably a non-foamed body. Production is easier in the case in which the insulating layer 2 is a non-foamed body in comparison with the case of being a foamed body. Consequently, there is, for example, less susceptibility to the occurrence of deterioration of skew, deterioration of VSWR and accompanying increases in attenuation caused by changes in outer diameter of the insulating layer 2. This becomes particularly prominent as the outer diameter of the insulating layer 2 becomes smaller, and more specifically, when the outer diameter of the insulating layer 2 becomes ≤ 0.7 mm. Furthermore, in the case in which the insulating layer 2 is a foamed body, the degree of foaming is preferably 30-60%. Here, the degree of foaming is calculated based on the equation indicated below.

[Math. 1]

$$\text{Degree of foaming (\%)} = [1 - (\text{specific gravity of foamed insulating layer after foaming/specific gravity of resin before foaming})] \times 100$$

In this case, increased coarseness of foam cells can be inhibited even when a wire using a propylene-based copolymer for the insulating layer 2 is used as a cable used in the gigahertz band, and a foamed insulating layer 2 can be obtained that has fine, uniform foam cells. In addition, the cable 10 that uses the insulated wire 5 has small variations in outer diameter, has few problems caused by crushing even if the thickness of the insulating layer 2 is reduced, and enables variations such as degradation of attenuation to be adequately inhibited.

In the case in which the insulating layer 2 is a foamed insulating layer, the foamed insulating layer can be obtained by incorporating a foaming agent such as a chemical foaming agent in the resin composition.

In addition, a thin layer composed of an unfoamed resin in the form of a so-called inner layer is preferably interposed between the insulating layer 2 and the internal conductor 1. As a result thereof, adhesion between the insulating layer 2 and the internal conductor 1 can be improved. In the case in which the unfoamed resin is composed of polyethylene in particular, adhesion between the insulating layer 2 and the internal conductor 1 can be further improved. In addition, the above-mentioned inner layer can also prevent degradation (embrittlement) of the insulating layer 2 caused by copper in the internal conductor 1. Furthermore, the thickness of the inner layer is, for example, 0.01-0.1 mm.

Moreover, a thin layer in the form of a so-called outer layer is preferably interposed between the insulating layer 2 and the outer conductor 3. There are many cases in which a transmission cable is required to be colored. In such cases, the use of an unfoamed resin as a thin layer enables coloring to be easily carried out without deteriorating electrical characteristics in comparison with the case of coloring with a pigment. In addition, if a thin layer composed of a foamed resin is interposed between the insulating layer 2 and the external conductor 3, the appearance of the insulated wire 5 is improved. Moreover, variations in outer diameter of the insulated wire 5 become small, skew and VSWR improve, crush resistance improves, and the outer diameter of the insulated wire 5 can be reduced. Furthermore, the thickness of the outer layer is, for example, 0.02-0.2 mm.

Moreover, the insulating layer 2 may be a layer obtained by melting and kneading the resin composition, and extruding and covering the internal conductor 1 followed by crosslinking the extrudate. In this case, although crosslinking treatment can be carried out by, for example, electron beam irradiation, in the case in which the resin composition contains a crosslinking agent such as an organic peroxide or sulfur, crosslinking treatment can also be carried out by heating. However, crosslinking treatment is preferably carried out by electron beam irradiation from the viewpoint of improving electrical characteristics.

<External Conductor>

Next, the external conductor 3 is formed so as to surround the insulated wire 5 obtained in the manner described above. A known external conductor used in the prior art can be used for the external conductor 3. For example, the external conductor 3 can be formed by wrapping a conductive wire, or a tape composed by interposing an electrically conductive sheet between resin sheets around the outer periphery of the insulating layer 2. In addition, the external conductor 3 can also be composed of a metal tube subjected to corrugation processing, namely molded to have a corrugated shape.

<Sheath>

Finally, the sheath 4 is formed. The sheath 4 protects the external conductor 3 from physical or chemical damage, and although examples of materials that compose the sheath 4 include resins such as fluororesin, polyethylene or polyvinyl chloride, from the viewpoints of e.g. environmental considerations, a halogen-free material such as polyethylene resin is used preferably.

The cable 10 is obtained in the manner described above.

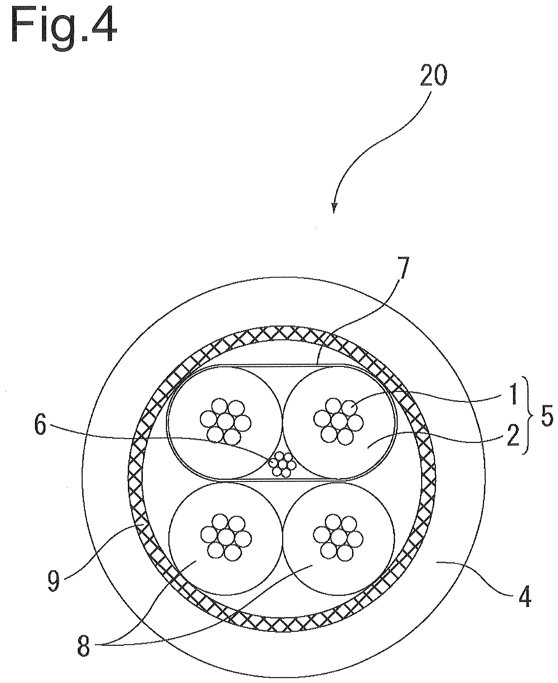

FIG. 4 is an end view showing a cable of the twinax type having the above-mentioned insulated wire 5. As shown in FIG. 4, a twinax cable 20 is provided with two insulated wires 5, a drain wire 6, a laminate tape 7, two electrical power wires 8, a laminate layer 9 composed of an aluminum tape layer and a braid layer, and the sheath 4. Here, the two insulated wires 5 are arranged mutually in parallel and are used as signal wires. In addition, the laminate tape 7 is wrapped around the insulated wires 5 and the drain wire 6, and the sheath 4 is formed on the laminate layer 9 so as to surround the laminate layer 9. The laminate tape 7 is composed of, for example, a laminate of aluminum foil and polyethylene terephthalate film, and the sheath 4 is composed of, for example, an olefin-based non-halogen material such as ANA9897N manufactured by RIKEN TECHNOS CORPORATION. Furthermore, the insulated wire 5 and the insulating layer 2 are the same as the previously described insulated wire 5 and insulating layer 2.

Although examples of applying the insulated wire 5 to a cable such as a coaxial cable or twinax cable are indicated in the above discussion of the present invention, the insulated wire 5 can also be applied to a high-speed transmission cable such as a USB 3.0 cable, HDMI cable, InfiniBand cable or micro USB cable. Example

The following provides a more specific explanation of the contents of the present invention by indicating examples and comparative examples.

<Examples >

(Example 1)

First, an ethylene-propylene random copolymer in the form of WMG03 (melting point: 142°C), obtained by synthesizing using a metallocene catalyst, was prepared for use as a base resin.

The above-mentioned base resin and the antioxidant and metal deactivator shown in Table 1 were loaded into an extruder (product name: LABOPLASTOMILL 4C150, twin-screw segmented extruder 2D30W2, screw diameter (D): 25 mm, effective screw length (L): 750 mm, manufactured by Toyo Seiki Seisaku-Sho, Ltd.) followed by melting and kneading to obtain a molten mixture. At this time, the incorporated amounts of antioxidant and metal deactivator shown in Table 1 were the amounts incorporated based on 100 pbm of the base resin (units: pbm), and the melting and kneading temperature was 200°C.

The above-mentioned molten extrudate was further melted and kneaded with an extruder (screw diameter (D): 25 mm, effective screw length (L): 800 mm, manufactured by Hijiri Manufacturing Ltd.) set to a temperature of 200°C and extruded into the shape of a tube. A tin-plated copper wire having a diameter of 0.172 mm was then covered with this tubular extrudate. Thus, an insulated wire was fabricated that was composed of a conductor and an insulating layer covering the conductor. At this time, the extrudate was extruded so that the outer diameter of the insulating layer was 0.6 mm and the thickness was 0.215 mm.

The insulated wire obtained in this manner was then wrapped with a laminate tape having a thickness of 25 $\mu$m and composed of a laminate of an aluminum layer and a polyethylene terephthalate layer. Next, this was covered with a sheath composed of PVC (polyvinyl chloride) having a thickness of 0.4 mm. Thus, a non-foamed and non-crosslinked coaxial cable was fabricated having impedance of 50 Ω.

(Examples 2-22 and Comparative Examples 1-5)

Coaxial cables were fabricated in the same manner as Example 1 with the exception of incorporating the antioxidants and metal deactivators shown in Table 1 at the ratios shown in Table 1 (units: pbm) based on 100 pbm of the base resins shown in Table 1.

(Comparative Examples 6-9)

The base resins shown in Table 1 were loaded into an extruder set to a temperature of 200°C (screw diameter (D): 25 mm, effective screw length (L): 800 mm, manufactured by Hijiri Manufacturing Ltd.), melted, kneaded and extruded into the shape of a tube. A tin-plated copper wire having a diameter of 0.172 mm was then covered with this tubular extrudate. Thus, insulated wires were fabricated that were composed of a conductor and an insulating layer covering the conductor. At this time, the extrudate was extruded so that the outer diameter of the insulating layer was 0.6 mm and the thickness was 0.215 mm.
Coaxial cables were then fabricated in the same manner as Example 1 using the insulated wires obtained in this manner.

(Examples 23-27)

Coaxial cables were fabricated in the same manner as Example 1 with the exception of setting the thickness of the insulating layer to values as shown in Table 3.
Furthermore, the products indicated below were specifically used for the base resins, antioxidants and metal deactivators shown in Table 1.

(1) Base Resins

(1-1) WFX4 (WINTEC, Japan Polypropylene Corporation) Propylene-ethylene random copolymer (m.p.: 125°C)
(1-2) WFW4 (WINTEC, Japan Polypropylene Corporation) Propylene-ethylene random copolymer (m.p.: 136°C)
(1-3) WMG03 (WINTEC, Japan Polypropylene Corporation) Propylene-ethylene random copolymer (m.p.: 142°C)
(1-4) WFX6 (WINTEC, Japan Polypropylene Corporation) Propylene-ethylene random copolymer (m.p.: 125°C)
(1-5) FX4G (NOVATEC-PP, Japan Polypropylene Corporation) Propylene-ethylene-butene random copolymer (m.p.: 126°C)
(1-6) FW4B (NOVATEC-PP, Japan Polypropylene Corporation) Propylene-ethylene-butene random copolymer (m.p.: 138°C)

(2) Antioxidants

(2-1) Semi-hindered phenol-based antioxidants

a) AO-80 (ADK STAB AO-80, ADEKA CORPORATION) 3,9-bis[2-{3-(3-tertiary-butyl-4-hydroxy-5-methylphenyl)propionyloxy}-1,1-dimethylethyl]-2,4,8, 10-tetraoxaspiro[5,5]undecane
b) AO-70 (ADK STAB AO-70, ADEKA CORPORATION) Triethylene glycolbis[3-(3-tert-butyl-4-hydroxy-5-methylphenyl)propionate]

(2-2) Less-hindered phenol-based antioxidants

a) AO-40 (ADK STAB AO-40, ADEKA CORPORATION) 4,4'-butylidenebis(3-methyl-6-tertiary-butyl)phenol
b) AO-30 (ADK STAB AO-30, ADEKA CORPORATION) 1,1,3-tris-(2-methyl-4-hydroxy-5-tertiary-butylpheny 1)butane
c) Noc300 (NOCRAC 300, OUCHI SHINKO CHEMICAL INDUSTRIAL CO., LTD.) 4,4'-thiobis(3-methyl-6-tertiary-butyl)phenol

(2-3) Hindered phenol-based antioxidants

    a) Ir3114 (IRGANOX 3114, BASF SE) 1,3,5-tris(3,5-di-tert-butyl-4-hydroxybenzyl)-1,3,5-triazine-2,4,6(1H,3H,5H)-trione

    b) Ir1330 (IRGANOX 1330, BASF SE) 3,3',3'',5,5',5''-hexa-tert-butyl-a,a',a''-(mesitylene-2,4,6-triyl)tri-p-cresol

(3) Metal Deactivators

(3-1) Non-hindered phenol-based metal deactivators

    a) CDA-1 (ADK STAB CDA-1, ADEKA CORPORATION) 3-(N-salicyloyl)amino-1,2,4-triazole

    b) CDA-6 (ADK STAB CDA-6, ADEKA CORPORATION) Decamethylene dicarboxylic acid disalicyloyl hydrazide

(3-2) Hindered phenol-based metal deactivators IrMD1024 (IRGANOX MD1024, BASF SE) 2',3-bis[3-(3,5-di-tert-butyl-4-hydroxyphenyl)propionyl] propionohydrazide

[Characteristics Evaluation]

The following characteristics were evaluated for the coaxial cables obtained in Examples 1-27 and Comparative Examples 1-9.

(1) Ethylene and Butene Contents

Ethylene content and butene content were calculated from IR spectra measured for test pieces composed of an insulating layer obtained by peeling off the insulating layer of insulated wires of the coaxial cables of Examples 1-22 and Comparative Examples 1-9. The results are shown in Table 1.

(2) Crystallization Peak Temperature, Melting Heat Peak Temperature (Melting Point) and Degree of Crystallization

Crystallization peak temperature and melting heat peak temperature were calculated by measuring by DSC for test pieces composed of an insulating layer obtained by peeling off the insulating layer of insulated wires of the coaxial cables of Examples 1-22 and Comparative Examples 1-9. The results are shown in Table 1. In addition, degree of crystallization was also calculated by measuring by DSC for the same test pieces. The results are shown in Table 1.

(3) Dielectric Characteristics (tan$\delta$)

Dielectric characteristics were investigated by measuring dielectric tangent (tan$\delta$). Here, dielectric tangent (tan$\delta$) was respectively measured at measuring frequencies of 3.0 GHz, 6.9 GHz, 10.7 GHz and 14.6 GHz with a microwave measuring system using the SUM-TMOmO measurement program available from SUMTEC, Inc. for a sheet obtained by molding resin compositions used to produce the insulating layers of the coaxial cables of Examples 1-22 and Comparative Examples 1-9 into the shape of rods having a diameter of 2 mm and length of 10 cm. The results are shown in Table 2. Acceptance criteria for tan$\delta$ at each frequency were as indicated below.

    3.0 GHz: $1.10 \times 10^{-4}$ or less

    6.9 GHz: $1.50 \times 10^{-4}$ or less

    10.7 GHz: $2.00 \times 10^{-4}$ or less

    14.6 GHz: $2.50 \times 10^{-4}$ or less

(4) Attenuation

Attenuation was respectively measured at frequencies of 3.0 GHz, 6.9 GHz, 10.7 GHz and 14.6 GHz using a network analyzer (8722ES, manufactured by Agilent Technologies, Inc.) for the coaxial cables obtained in Examples 1-22 and Comparative Examples 1-9. The results are shown in Table 2.

(5) Heat Resistance

Test pieces were fabricated by cutting the insulated wires of the coaxial cables of Examples 1-22 and Comparative Examples 1-9 to a length of 30 mm. The test pieces were placed in the center of a sample stand having a diameter of 9 mm followed by measurement of the amount of deformation under a load of 250 g, load duration of 1 hour and temperature of 121°C using a heat deformation tester (Triple Parallel Plate Plastomer Model W-3, manufactured by Toyo Seiki Seisaku-sho, Ltd.). Crushing ratio (heat deformation ratio) was calculated from the amount of deformation, and this crushing ratio was used as an indicator of heat resistance. The results are shown in Table 2.

(6) Crush Resistance

Shore D hardness, which indicates surface hardness, was measured and this Shore D hardness was used as an indicator of crush resistance. The Shore D hardness of the insulated wires of Examples 1-22 and Comparative Examples 1-9 was measured in compliance with JIS K7215. Results measured at a load holding time of 5 seconds are shown in Table 2.

(7) Heat Aging Resistance Characteristics

Heat aging resistance characteristics were evaluated in the manner described below. Namely, tensile strength and elongation retention were first measured by carrying out tensile tests on the coaxial cables of Examples 1-22 and Comparative Examples 1-9. These were referred to as "initial tensile strength" and "initial elongation retention", respectively. Next, tensile strength and elongation retention were measured by carrying out tensile tests after allowing the coaxial cables to stand in a constant temperature bath at 110°C and periodically removing from the constant temperature bath. The number of days at which this tensile strength reached 50% of the initial tensile strength or the number of days at which this elongation retention reached 50% of the initial elongation retention was calculated as a relative value in the case that the number of days for Comparative Example 6 in which antioxidant and metal deactivator were not used was set to a value of 100. The results are shown in Table 2. A relative value of 110 or more was judged to be "acceptable" in terms of having superior heat aging resistance, while a relative value of less than 110 was judged to be "unacceptable" in terms of having inferior heat aging resistance.

(8) Bloom (Blooming)

The sheath and laminate tape were removed from the coaxial cables of Examples 1-22 and Comparative Examples 1-9 cut to a length of 3 m, and the exposed surface of the insulating layer was observed visually after leaving for 3 months at 50°C. Bloom was evaluated based on the criteria indicated below. The results are shown in Table 2.

A: No foreign objects able to be confirmed on the surface of the insulating layer when observing the surface of the insulating layer with a microscope at a magnification of 100 times
B: Foreign objects able to be confirmed on the surface of the insulating layer when observing the surface of the insulating layer with a microscope at a magnification of 100 times
C: Foreign objects able to be confirmed on the surface of the insulating layer when observing the surface of the insulating layer with a microscope at a magnification of 25 times
D: Foreign objects able to be confirmed on the surface of the insulating layer when visually observing the surface of the insulating layer

(9) Low-Temperature Embrittlement Characteristics

Low-temperature embrittlement characteristics were evaluated by carrying out a low-temperature embrittlement test on the coaxial cables of Examples 1 and 23-27. The low-temperature embrittlement test was carried out in the manner indicated below.

Namely, embrittlement temperature was measured for the coaxial cables of Examples 1 and 23-27 using an embrittlement temperature tester (product name: Brittleness Tester TM-2110, manufactured by Ueshima Seisakusho Co., Ltd.). At this time, coaxial cables (samples) cut to about 60 mm were used as test pieces. Test conditions were in accordance with ASTM D746. In addition, the temperature at which damage or cracks occurred in the insulating layer was taken to be the embrittlement temperature (F50). The relationship between thickness of the insulating layer and embrittlement temperature was then investigated. The results are shown in Table 3. In this Table

CE        = Comparative Example

A = ethylene content

B = butene content

MP = melting point

DC = degree of crystallinity

CPT = crystallization peak temperature

[Table 1]

| | Base Resin (Propylene-based copolymer) | | | | | | | | Antioxidant | | | | | | | Metal Deactivator | | |
| | | MP (°C) | DC (%) | A (mass-%) | B (mass-%) | A + B (mass-%) | CPT (°C) | MP-CPT (°C) | Catalyst | Semi-hindered | | Less-hindered | | | Hindered | | Non-hindered | | Hindered |
| | | | | | | | | | | AO-80 | AO-70 | AO-40 | AO-30 | Noc 300 | Ir 3114 | Ir 1330 | CDA-6 | CDA-1 | IrMD 1024 |
|---|---|---|---|---|---|---|---|---|---|---|---|---|---|---|---|---|---|---|---|
| Ex.1 | WMG03 | 142 | 57 | 1.5 | 0.0 | 1.5 | 110 | 32 | Metallocene | 0.01 | | | | | | | | | |
| Ex.2 | WMG03 | 142 | 57 | 1.5 | 0.0 | 1.5 | 110 | 32 | Metallocene | 0.1 | | | | | | | | | |
| Ex.3 | WMG03 | 142 | 57 | 1.5 | 0.0 | 1.5 | 110 | 32 | Metallocene | 1 | | | | | | | | | |
| Ex.4 | WMG03 | 142 | 57 | 1.5 | 0.0 | 1.5 | 110 | 32 | Metallocene | | 0.1 | | | | | | | | |
| Ex.5 | WMG03 | 142 | 57 | 1.5 | 0.0 | 1.5 | 110 | 32 | Metallocene | | | 0.01 | | | | | | | |
| Ex.6 | WMG03 | 142 | 57 | 1.5 | 0.0 | 1.5 | 110 | 32 | Metallocene | | | 0.1 | | | | | | | |
| Ex.7 | WMG03 | 142 | 57 | 1.5 | 0.0 | 1.5 | 110 | 32 | Metallocene | | | 1 | | | | | | | |
| Ex.8 | WMG03 | 142 | 57 | 1.5 | 0.0 | 1.5 | 110 | 32 | Metallocene | | | | 0.1 | | | | | | |
| Ex.9 | WMG03 | 142 | 57 | 1.5 | 0.0 | 1.5 | 110 | 32 | Metallocene | | | | | 0.1 | | | | | |
| Ex. 10 | WMG03 | 142 | 57 | 1.5 | 0.0 | 1.5 | 110 | 32 | Metallocene | 0.1 | | | | | | | 0.01 | | |
| Ex. 11 | WMG03 | 142 | 57 | 1.5 | 0.0 | 1.5 | 110 | 32 | Metallocene | 0.1 | | | | | | | 0.1 | | |
| Ex. 12 | WMG03 | 142 | 57 | 1.5 | 0.0 | 1.5 | 110 | 32 | Metallocene | 0.1 | | | | | | | 1 | | |
| Ex. 13 | WMG03 | 142 | 57 | 1.5 | 0.0 | 1.5 | 110 | 32 | Metallocene | 0.1 | | | | | | | | 0.01 | |
| Ex. 14 | WMG03 | 142 | 57 | 1.5 | 0.0 | 1.5 | 110 | 32 | Metallocene | 0.1 | | | | | | | | 0.1 | |
| Ex. 15 | WMG03 | 142 | 57 | 1.5 | 0.0 | 1.5 | 110 | 32 | Metallocene | 0.1 | | | | | | | | 1 | |
| Ex. 16 | WMG03 | 142 | 57 | 1.5 | 0.0 | 1.5 | 110 | 32 | Metallocene | 0.01 | | | | | | | | 0.01 | |

(continued)

| | | Base Resin (Propylene-based copolymer) | | | | | | | | Antioxidant | | | | | | | Metal Deactivator | | |
|---|---|---|---|---|---|---|---|---|---|---|---|---|---|---|---|---|---|---|---|
| | | MP (°C) | DC (%) | A (mass-%) | B (mass-%) | A + B (mass-%) | CPT (°C) | MP-CPT (°C) | Catalyst | Semi-hindered | | Less-hindered | | | Hindered | | Non-hindered | | Hindered |
| | | | | | | | | | | AO-80 | AO-70 | AO-40 | AO-30 | Noc 300 | Ir 3114 | Ir 1330 | CDA-6 | CDA-1 | IrMD 1024 |
| Ex. 17 | WMG03 | 142 | 57 | 1.5 | 0.0 | 1.5 | 110 | 32 | Metallocene | 1 | | | | | | | | 1 | |
| Ex. 18 | WMG03 | 142 | 57 | 1.5 | 0.0 | 1.5 | 110 | 32 | Metallocene | 0.1 | | | | | | | | 1.5 | |
| Ex. 19 | WMG03 | 142 | 57 | 1.5 | 0.0 | 1.5 | 110 | 32 | Metallocene | 0.1 | | | | | | | | | 0.1 |
| Ex. 20 | WFW4 | 136 | 52 | 2.3 | 0.0 | 2.3 | 103 | 33 | Metallocene | 1 | | | | | | | | 1 | |
| Ex. 21 | WFX4 | 125 | 41 | 4.4 | 0.0 | 4.4 | 94 | 31 | Metallocene | 1 | | | | | | | | 1 | |
| Ex. 22 | WFX6 | 125 | 37 | 3.2 | 0.2 | 3.4 | 87 | 38 | Metallocene | 1 | | | | | | | | 1 | |
| CE 1 | FX4G | 126 | 37 | 4.2 | 3.2 | 7.4 | 83 | 43 | Ziegler-Natta | 1 | | | | | | | | 1 | |
| CE 2 | FW4B | 138 | 46 | 3.3 | 2.3 | 5.6 | 91 | 47 | Ziegler-Natta | 1 | | | | | | | | 1 | |
| CE 3 | WFX6 | 125 | 37 | 3.2 | 0.2 | 3.4 | 87 | 38 | Metallocene | | | | | | 1 | | | | |
| CE 4 | WFX6 | 125 | 37 | 3.2 | 0.2 | 3.4 | 87 | 38 | Metallocene | | | | | | | 1 | | | |
| CE 5 | WMG03 | 142 | 57 | 1.5 | 0.0 | 1.5 | 110 | 32 | Metallocene | 1.5 | | | | | | | | | |
| CE 6 | WMG03 | 142 | 57 | 1.5 | 0.0 | 1.5 | 110 | 32 | Metallocene | | | | | | | | | | |
| CE 7 | FW4B | 138 | 46 | 3.3 | 2.3 | 5.6 | 91 | 47 | Ziegler-Natta | | | | | | | | | | |
| CE 8 | FX4G | 126 | 37 | 4.2 | 3.2 | 7.4 | 83 | 43 | Ziegler-Natta | | | | | | | | | | |
| CE 9 | WFW4 | 136 | 52 | 2.3 | 0.0 | 2.3 | 94 | 32 | Metallocene | | | | | | | | | | |

[Table 2]

| | Dielectric Characteristics | | | | | | | | Heat Resistance | Crush Resistance | Heat Aging Resistance Characteristics | Bloom |
| | tanδ (x10⁻⁴) [-] | | | | Attenuation [dB/m] | | | | Crushing ratio (heat deformation ratio) (%) | Shore D hardness | | |
| | 3.0 GHz | 6.9 GHz | 10.7 GHz | 14.6 GHz | 3.0 GHz | 6.9 GHz | 10.7 GHz | 14.6 GHz | | | | |
|---|---|---|---|---|---|---|---|---|---|---|---|---|
| Ex.1 | 0.59 | 0.67 | 0.75 | 0.82 | 2.98 | 4.54 | 5.68 | 6.67 | 12 | 71 | 120 | A |
| Ex.2 | 0.64 | 0.74 | 0.83 | 0.92 | 2.98 | 4.55 | 5.70 | 6.69 | 12 | 71 | 200 | A |
| Ex.3 | 1.05 | 1.35 | 1.63 | 1.94 | 3.00 | 4.62 | 5.83 | 6.92 | 12 | 71 | 240 | B |
| Ex.4 | 0.92 | 1.00 | 1.07 | 1.14 | 2.99 | 4.57 | 5.73 | 6.74 | 12 | 71 | 200 | A |
| Ex.5 | 0.59 | 0.67 | 0.74 | 0.82 | 2.97 | 4.54 | 5.68 | 6.67 | 12 | 71 | 120 | A |
| Ex.6 | 0.61 | 0.70 | 0.78 | 0.87 | 2.98 | 4.54 | 5.69 | 6.68 | 12 | 71 | 200 | A |
| Ex.7 | 0.79 | 0.99 | 1.17 | 1.39 | 2.99 | 4.57 | 5.75 | 6.79 | 12 | 71 | 240 | B |
| Ex.8 | 0.70 | 0.82 | 0.94 | 1.05 | 2.98 | 4.55 | 5.71 | 6.72 | 12 | 71 | 200 | A |
| Ex.9 | 0.79 | 0.94 | 1.08 | 1.23 | 2.98 | 4.56 | 5.73 | 6.75 | 12 | 71 | 200 | A |
| Ex.10 | 0.64 | 0.74 | 0.83 | 0.93 | 2.98 | 4.55 | 5.70 | 6.70 | 12 | 71 | 260 | A |
| Ex.11 | 0.67 | 0.77 | 0.86 | 0.95 | 2.98 | 4.55 | 5.70 | 6.70 | 12 | 71 | 340 | A |
| Ex.12 | 0.99 | 1.06 | 1.13 | 1.22 | 3.00 | 4.58 | 5.75 | 6.76 | 12 | 71 | 420 | B |
| Ex.13 | 0.63 | 0.73 | 0.83 | 0.92 | 2.98 | 4.55 | 5.69 | 6.69 | 12 | 71 | 240 | A |
| Ex.14 | 0.61 | 0.72 | 0.82 | 0.92 | 2.98 | 4.54 | 5.69 | 6.69 | 12 | 71 | 320 | A |
| Ex.15 | 0.42 | 0.58 | 0.73 | 0.90 | 2.97 | 4.53 | 5.68 | 6.69 | 12 | 71 | 400 | B |
| Ex.16 | 0.59 | 0.67 | 0.75 | 0.82 | 2.97 | 4.54 | 5.68 | 6.67 | 12 | 71 | 140 | A |
| Ex.17 | 0.83 | 1.19 | 1.53 | 1.92 | 2.99 | 4.60 | 5.81 | 6.91 | 12 | 71 | 540 | B |
| Ex.18 | 0.31 | 0.50 | 0.68 | 0.89 | 2.96 | 4.52 | 5.67 | 6.69 | 12 | 71 | 410 | C |
| Ex.19 | 0.84 | 1.13 | 1.41 | 1.70 | 2.99 | 4.58 | 5.78 | 6.85 | 12 | 71 | 320 | A |
| Ex.20 | 0.99 | 1.36 | 1.72 | 2.14 | 3.00 | 4.62 | 5.84 | 6.96 | 15 | 67 | 524 | B |
| Ex.21 | 0.91 | 1.31 | 1.70 | 2.14 | 3.00 | 4.61 | 5.84 | 6.95 | 45 | 65 | 486 | B |
| Ex.22 | 0.97 | 1.48 | 1.94 | 2.47 | 3.00 | 4.62 | 5.87 | 7.01 | 45 | 68 | 486 | B |

| | Dielectric Characteristics | | | | | | | | Heat Resistance | Crush Resistance | Heat Aging Resistance Characteristics | Bloom |
|---|---|---|---|---|---|---|---|---|---|---|---|---|
| | tan$\delta$ ($\times10^{-4}$) [-] | | | | Attenuation [dB/m] | | | | Crushing ratio (heat deformation ratio) (%) | Shore D hardness | | |
| | 3.0 GHz | 6.9 GHz | 10.7 GHz | 14.6 GHz | 3.0 GHz | 6.9 GHz | 10.7 GHz | 14.6 GHz | | | | |
| Comp. Ex. 1 | 1.17 | 1.77 | 2.36 | 2.99 | 3.01 | 4.66 | 5.94 | 7.14 | 50 | 63 | 459 | B |
| Comp. Ex. 2 | 1.27 | 1.76 | 2.23 | 2.74 | 3.00 | 4.64 | 5.90 | 7.05 | 16 | 62 | 513 | B |
| Comp. Ex. 3 | 3.99 | 6.74 | 9.34 | 11.89 | 3.12 | 5.11 | 6.94 | 8.88 | 45 | 68 | 162 | B |
| Comp. Ex. 4 | 3.54 | 6.64 | 9.64 | 12.74 | 3.10 | 5.10 | 6.98 | 9.05 | 45 | 68 | 162 | B |
| Comp. Ex. 5 | 1.28 | 1.69 | 2.08 | 2.51 | 3.02 | 4.65 | 5.90 | 7.04 | 12 | 71 | 300 | C |
| Comp. Ex. 6 | 0.59 | 0.67 | 0.74 | 0.81 | 2.97 | 4.54 | 5.68 | 6.67 | 12 | 71 | 100 | A |
| Comp. Ex. 7 | 1.03 | 1.24 | 1.44 | 1.63 | 2.99 | 4.59 | 5.78 | 6.83 | 16 | 62 | 95 | A |
| Comp. Ex. 8 | 0.93 | 1.25 | 1.57 | 1.88 | 2.99 | 4.60 | 5.81 | 6.89 | 50 | 63 | 85 | A |
| Comp. Ex. 9 | 0.75 | 0.84 | 0.93 | 1.03 | 2.98 | 4.56 | 5.71 | 6.72 | 15 | 67 | 97 | A |

**EP 2 648 191 B1**

[Table 3]

| | Insulating Layer Thickness (mm) | Low-Temperature Embrittlement Characteristics |
| --- | --- | --- |
| | | Embrittlement Temperature (F50) (°C) |
| Example 1 | 0.215 | -60°C or lower |
| Example 23 | 0.173 | -60°C or lower |
| Example 24 | 0.27 | -37°C |
| Example 25 | 0.344 | -5°C |
| Example 26 | 0.397 | -5°C |
| Example 27 | 0.481 | 5°C |

According to the results shown in Tables 1 and 2, in each of Examples 1-22, dielectric tangent was low, attenuation was low, and the relative number of years representing heat aging resistance was high. In contrast, in Comparative Examples 1-9, it was found that the relative number of years representing heat aging resistance was low or that dielectric tangent was high.

Furthermore, according to the results shown in Table 3, it was also confirmed that embrittlement temperature decreased remarkably and low-temperature embrittlement characteristics improved remarkably by reducing the thickness of the insulating layer to ≤ 0.3 mm.

On the basis of the above, according to the insulated wire of the present invention, superior dielectric characteristics in the gigahertz band as well as superior heat aging resistance were confirmed to be able to be realized.

EXPLANATION OF REFERENCE NUMBERS

[0113]

1        Internal conductor (conductor)
1a       Body portion
1b       Plating film
2        Insulating layer
5        Insulated wire
10, 20   Cable

**Claims**

1.  An insulated wire comprising:

    (i) a conductor and, covering the conductor
    (ii) an insulating layer containing

        - a propylene-based copolymer obtained by synthesis using a metallocene catalyst and, per 100 parts by mass of the propylene-based copolymer
        - 0.01 to less than 1.5 parts by mass of an antioxidant having a chemical structure different from a hindered phenol structure; and
        - 0.01 to less than 1.5 parts by mass of a metal deactivator having a chemical structure different from a hindered phenol structure.

2.  The insulated wire of claim 1, wherein the propylene-based copolymer is an ethylene-propylene copolymer.

3.  The insulated wire of claim 1, wherein the propylene-based copolymer has a melting point of 125-145°C.

4.  The insulated wire of claim 1, wherein the antioxidant is a semi-hindered phenol-based antioxidant selected from 3,9-bis[2-{3-(3-tertiary-butyl-4-hydroxy-5-methylphenyl)propionyloxy}-1,1-dimethylethyl]-2,4,8,10-tetraoxaspiro[5,5]undecane,

ethylenebis(oxyethylene) bis[3-(5-tert-butyl-hydroxy-m-tolyl)propionate], and
triethylene glycolbis[3-(3-tert-butyl-4-hydroxy-5-methylphenyl)propionate]; or
a less-hindered phenol-based antioxidant selected from 4,4'-thiobis(3-methyl-6-tertiary-butyl)phenol, 1,1,3-tris-(2-methyl-4-hydroxy-5-tertiary-butylphenyl)butane, and
4,4'-butylidenebis (3-methyl-6-tertiary-butyl)phenol.

5. The insulated wire of claim 1, wherein the conductor has:

a body portion containing at least one type of material selected from the group consisting of copper, copper alloy, aluminum and aluminum alloy, and
a plating film covering the body portion and containing at least one type of material selected from the group consisting of tin and silver.

6. The insulated wire of claim 1, wherein the insulating layer has a thickness of 0.3 mm or less.

7. The use of the insulated wire of claim 1 in a transmission cable.

8. A cable having the insulated wire of claim 1.

9. The cable of claim 8 which is a transmission cable.

**Patentansprüche**

1. Isolierter Draht, umfassend:

(i) einen Leiter und, zum Ummanteln des Leiters,
(ii) eine Isolierschicht, enthaltend

- ein Propylen-basiertes Copolymer, erhalten durch Synthese unter Verwendung eines Metallocen-Katalysators und, pro 100 Masseteilen des Propylen-basierten Copolymers,
- 0,01 bis weniger als 1,5 Masseteile eines Antioxidans mit einer chemischen Struktur, die von der Struktur eines gehinderten Phenols verschieden ist; und
- 0,01 bis weniger als 1,5 Masseteile eines Metalldesaktivators mit einer chemischen Struktur, die von der Struktur eines gehinderten Phenols verschieden ist.

2. Isolierter Draht gemäss Anspruch 1, wobei das Propylenbasierte Copolymer ein Ethylen-Propylen-Copolymer ist.

3. Isolierter Draht gemäss Anspruch 1, wobei das Propylenbasierte Copolymer einen Schmelzpunkt von 125 bis 145°C aufweist.

4. Isolierter Draht gemäss Anspruch 1, wobei das Antioxidans ein Antioxidans auf Basis eines teilweise gehinderten Phenols, ausgewählt aus 3,9-Bis[2-{3-(3-tert-butyl-4-hydroxy-5-methylphenyl)propionyloxy}-1,1-dimethylethyl]-2,4,8,10-tetraoxaspiro[5,5]undecan, Ethylenbis(oxyethylen)bis[3-(5-tert-butyl-hydroxy-m-tolyl)propionat] und Triethylenglykolbis[3-(3-tert-butyl-4-hydroxy-5-methylphenyl)propionat], oder
ein Antioxidans auf Basis eines weniger gehinderten Phenols, ausgewählt aus 4,4'-Thiobis(3-methyl-6-tert-butyl)phenol, 1,1,3-Tris-(2-methyl-4-hydroxy-5-tert-butylphenyl)butan und 4,4'-Butylidenbis(3-methyl-6-tert-butyl)phenol,
ist.

5. Isolierter Draht gemäss Anspruch 1, wobei der Leiter aufweist:

ein Körperteil, enthaltend zumindest eine Art eines Materials, ausgewählt aus der Gruppe bestehend aus Kupfer, Kupferlegierung, Aluminium und Aluminiumlegierung, und
einen Plattierungsfilm, der das Körperteil bedeckt und zumindest eine Art eines Materials, ausgewählt aus der Gruppe bestehend aus Zinn und Silber, enthält.

6. Isolierter Draht gemäss Anspruch 1, wobei die Isolierschicht eine Dicke von 0,3 mm oder weniger aufweist.

**7.** Verwendung des isolierten Drahtes gemäss Anspruch 1 in einem Übertragungskabel.

**8.** Kabel, das den isolierten Draht gemäss Anspruch 1 aufweist.

**9.** Kabel gemäss Anspruch 8, das ein Übertragungskabel ist.


**Revendications**

**1.** Fil isolé comprenant :

(i) un conducteur et, recouvrant le conducteur
(ii) une couche isolante contenant

- un copolymère à base de propylène obtenu par synthèse en utilisant un catalyseur à métallocène et, pour 100 parties en masse du copolymère à base de propylène
- 0,01 à moins de 1,5 partie en masse d'un antioxydant ayant une structure chimique différente d'une structure de phénol encombré ; et
- 0,01 à moins de 1,5 partie en masse d'un désactivateur de métal ayant une structure chimique différente d'une structure de phénol encombré.

**2.** Fil isolé selon la revendication 1, dans lequel le copolymère à base de propylène est un copolymère d'éthylène-propylène.

**3.** Fil isolé selon la revendication 1, dans lequel le copolymère à base de propylène présente un point de fusion de 125 à 145 °C.

**4.** Fil isolé selon la revendication 1, dans lequel l'antioxydant est un antioxydant à base de phénol semi-encombré sélectionné parmi
le 3,9-bis[2-{3-(3-tert-butyl-4-hydroxy-5-méthylphényl)propionyloxy}-1,1diméthyl-éthyl]-2,4,8,10-tétraoxaspiro[5,5]undécane,
le bis[3-(5-tert-butyl-hydroxy-m-tolyl)propionate] d'éthylènebis(oxyéthylène), et
le bis[3-(3-tert-butyl-4-hydroxy-5-méthylphényl)propionate] de triéthylène glycol ; ou
un antioxydant à base de phénol moins encombré sélectionné parmi
le 4,4'-thiobis(3-méthyl-6-tert-butyl)phénol,
le 1,1,3-tris-(2-méthyl-4-hydroxy-5-tert-butylphényl)butane, et
le 4,4'-butylidènebis(3-méthyl-6-tert-butyl)phénol.

**5.** Fil isolé selon la revendication 1, dans lequel le conducteur présente :

une partie corps contenant au moins un type de matériau sélectionné dans le groupe constitué du cuivre, d'un alliage de cuivre, de l'aluminium et d'un alliage d'aluminium, et
un film de placage recouvrant la partie corps et contenant au moins un type de matériau sélectionné dans le groupe constitué de l'étain et de l'argent.

**6.** Fil isolé selon la revendication 1, dans lequel la couche isolante présente une épaisseur de 0,3 mm ou moins.

**7.** Utilisation du fil isolé selon la revendication 1 dans un câble de transmission.

**8.** Câble ayant le fil isolé selon la revendication 1.

**9.** Câble selon la revendication 8 qui est un câble de transmission.

# Fig.1

# Fig.2

Fig.3

1

1a

1b

# Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009081132 A
- EP 2433982 A
- US 20040158000 A1
- JP 2009299052 A
- FR 297741 A

**Non-patent literature cited in the description**

- Polymer Analysis Handbook of the Polymer Analysis Research Group. The Japan Society for Analytical Chemistry, 413-415
- Polypropylene Handbook. 1998, 149